# EUROPÄISCHE PATENTSCHRIFT

(11) **EP 0 447 760 B1**
(45) Veröffentlichungstag und Bekanntmachung des Hinweises auf die Patenterteilung: **25.05.1994**
(21) Anmeldenummer: 91101009.8
(22) Anmeldetag: 26.01.1991
(51) Int. Cl.: A23L 2/28

(54) **Verfahren zum Aufbereiten von aus Fruchtkonzentrat o.dgl. hergestellten Getränken**
Process for preparing drinks out of concentrated fruit juices
Procédé de préparation de boissons à partir de jus concentrés de fruits

(30) Priorität: 20.03.1990 DE 4008845
(43) Veröffentlichungstag der Anmeldung: 25.09.1991
(73) Patentinhaber: Eckes-Granini GmbH & Co. Kommanditgesellschaft, D-55268 Nieder-Olm (DE)
(72) Erfinder: Fuchs, Günter, Dr., W-4933 Blomberg (DE); Geiss, Helmut, W-4815 Schloss Holte / Stukenbrock (DE); Horn, Hans-Peter, W-4937 Lage / Hörste (Lippe) (DE)
(74) Vertreter: Lederer, Franz, Dr.

(56) Entgegenhaltungen:
- EP-A- 0 095 202
- EP-A- 0 098 389
- EP-A- 0 136 793
- Handbuch der Lebensmitteltechnologie, Frucht- und Gemüsesäfte, Ulrich Schobinger, Verlag Ulmer, Stuttgart, 1987.

## Beschreibung

Die vorliegende Erfindung betrifft ein Verfahren gemäß dem Oberbegriff des Anspruches 1.

Die verfahrenstechnisch betroffenen Getränke sind Säfte aller Art. Bei der Gewinnung des Konzentrats durch Entzug des Wassers werden auch die Aromastoffe entzogen, d.h. das Fruchtfleisch und die Aromastoffe werden getrennt. Diese Aromastoffe werden bei der Aufbereitung des Saftes wieder zugeschlagen. Außer den Aromastoffen können noch weitere Zusatzstoffe zugegeben werden, beispielsweise Vitamine, Gase und Mineralstoffe in Lösung. Im Zuge der Aufbereitung des Saftes wird dieser durch Erhitzen mit einer Temperatur von 80 bis 90° C sterilisiert. Diese Temperatur wird ca. 5 Minuten gehalten. Nach den bisher bekannten Verfahren wird der Saft im erhitzten Zustand in Flaschen abgefüllt. Die Aroma- und die weiteren Zusatzstoffe sind thermolabil, d.h., bei einer Erwärmung wird deren Wirkung verschlechtert. Bei den bisher bekannten Aufbereitungsverfahren unterliegen die Aroma- und die Zusatzstoffe jedoch dieser thermischen Belastung.

Die EP-A-0 095 202 betrifft ein Verfahren zur Herstellung keimfreier Fruchtsaftgetränke, wobei einem sterilisierten Basis-Fruchtsaft künstliche oder natürliche Aromastoffe zugegeben werden, die beispielsweise durch Keimfiltration sterilisiert worden sind. Die Aromastoffe werden dem Basis-Fruchtsaft auf seinem Weg von der Sterilisierungseinrichtung zum Speichertank einer automatischen Verpackungsmaschine genau dosiert zugegeben und mittels einer Mischeinrichtung miteinander vermischt.

Im Handbuch der Lebensmitteltechnologie, Frucht- und Gemüsesäfte, Ulrich Schobinger, Verlag Ulmer, Stuttgart, 1987, Seiten 428 und 429, wird eine Anlage zur Fertigstellung von Frucht- bzw. Gemüsesäften beschrieben, bei der einem Basis-Fruchtsaft eine genau dosierte Menge eines Aromakonzentrats, das bei der Aromaabtrennung aus dem ursprünglichen Saft gewonnen wurde, wieder zugegeben wird. Im einzelnen wird der Basis-Fruchtsaft mit einer Pumpe (10) über einen Schichtenfilter (11) in einen Puffertank (13), der auch mit einem langsam laufenden Rührwerk versehen ist, gefördert. Das Aromakonzentrat wird unter Luftabschluß über ein Dosiergerät (12) mittels einer Spezialpumpe in die Rohrleitung des Saftes unter Luftabschluß eingespeist und dabei mit dem Saft innigst vermischt. Der filtrierte und nach Bedarf aromatisierte, trinkfertige Saft wird in dem Puffertank (13) aufgefangen, nochmals langsam umgerührt, pasteurisiert und heiß in Flaschen abgefüllt (vgl. Seite 429 oben).

Der vorliegenden Erfindung liegt die Aufgabe zugrunde, in einfacher Weise die wärmeempfindlichen thermolabilen Zusatzstoffe und die Aroma- stoffe in ihrer Wirkung zu erhalten, so daß das Getränk qualitativ hochwertiger wird.

Der Erfindung liegt darüber hinaus auch die Aufgabe zugrunde, eine Dosiereinrichtung zu schaffen, um die Aroma- und Zusatzstoffe fein dosiert in das abgekühlte Getränk einzubringen.

Die gestellte Aufgabe bezüglich des Verfahrens wird durch die im Kennzeichen des Anspruches 1 aufgeführten Merkmale gelöst.

Das Getränk wird nunmehr mit einer Ultrahocherhitzungsanlage in einer Zeit von beispielsweise 10 Sekunden sterilisiert. Die ebenfalls keimfreien Aroma- und Zusatzstoffe werden unmittelbar vor dem Abfüllen des abgekühlten Getränkes in Flaschen oder sonstige geeignete Behältnisse zugeschlagen. Daher entfällt die bei den bisher bekannten verfahren auftretende thermische Belastung. Da die Aroma- und Zusatzstoffe in ihrer Wirkung voll erhalten bleiben, so daß sich entweder das Getränk geschmacklich verbessert oder aber daß eine kleinere Menge zugeschlagen werden kann. Beim Abfüllen des Getränkes im heißen Zustand ist es notwendig, daß das Getränk entgast wird. Dabei muß auf die Aromastoffe Rücksicht genommen werden. Nunmehr ist es möglich, die Entgasung zu optimieren, so daß nur ein relativ geringer Restgasgehalt im Getränk verbleibt.

Damit sich die Aroma- und Zusatzstoffe gleichmäßig verteilen, ist vorgesehen, daß nach der Zugabe eine Mischung durchgeführt wird, die ausschließlich durch Verwirbelung erfolgt, damit sichergestellt ist, daß das Fließverhalten der Fruchtfleischpartikel nicht negativ beeinflußt wird.
Die gestellte Aufgabe bezüglich der Dosiereinrichtung wird durch die im Kennzeichen des Anspruches 2 aufgeführten Merkmale gelöst.

Die erfindungsgemäße Kombination ermöglicht eine genau dosierte Zugabe der Aroma- und der Zusatzstoffe. Die erfindungsgemäße Dosiereinrichtung erlaubt den sterilen Zuschlag der Aroma- und Zusatzstoffe, so daß auf chemische Mittel verzichtet werden kann. Zur Steuerung der Dosierpumpe ist es zweckmäßig, wenn in der nachgeschalteten Rohrleitung die Menge der in einer bestimmten Zeiteinheit geförderten Stoffe mittels einer Durchflußmeßeinrichtung ermittelt wird. Die ermittelten Werte können dann entsprechend verarbeitet werden und für die Steuerung der Dosierpumpe benutzt werden.

Weitere Kennzeichen und Merkmale einer vorteilhaften Ausgestaltung der vorliegenden Erfindung sind Gegenstand von weiteren Unteransprüchen und ergeben sich aus der nachfolgenden Beschreibung eines Ausführungsbeispiels. Es zeigen:
- Fig. 1: eine Prinzipskizze des erfindungsgemäßen Verfahrens und
- Fig. 2: die Dosiereinrichtung, rein schematisch.

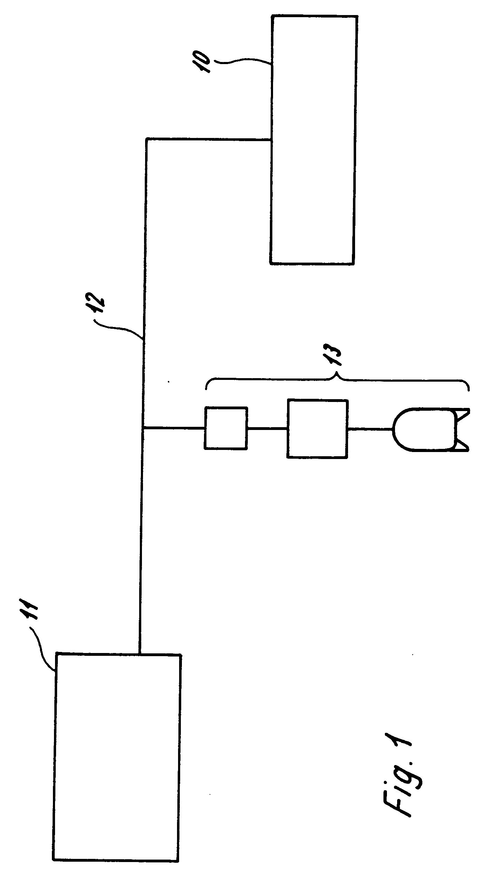

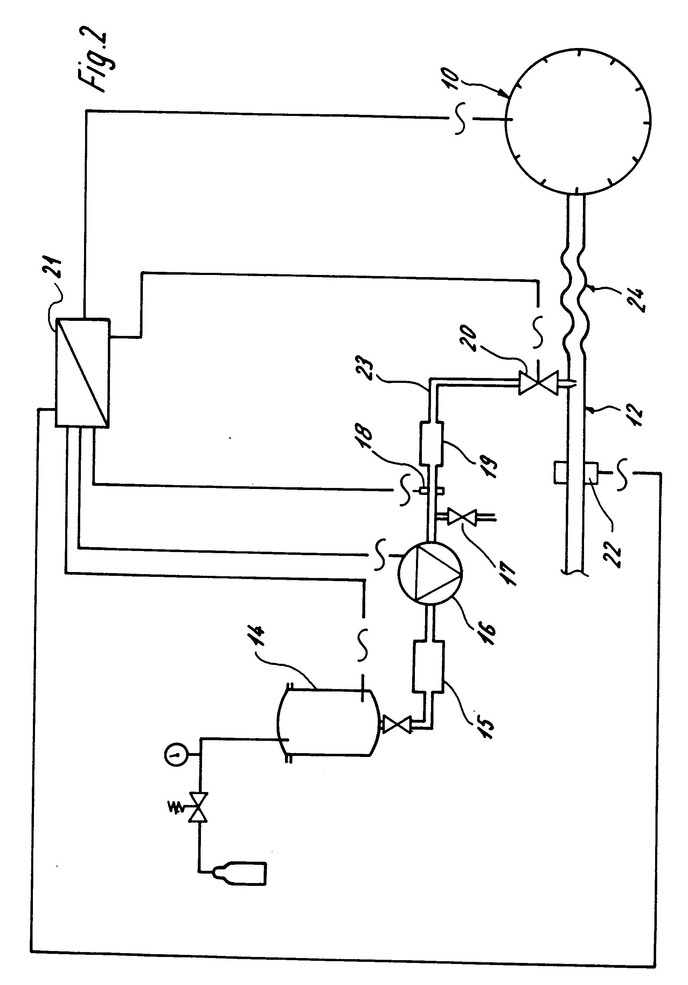

Die zu füllenden Flaschen oder die sonstigen geeigneten Behältnisse werden mit einer bekannten Fülleinrichtung 10 gefüllt, die in den Fig. 1 und 2 rein symbolisch dargestellt ist. Das Getränk wird mit einer Ultrahocherhitzungsanlage 11 sterilisiert. Die Rohr- oder Schlauchleitungen zwischen der Ultrahocherhitzungsanlage 11 und der Fülleinrichtung 10 ist in der Fig. 1 durch die Linie 12 in der Fig. 2 durch das Rohrstück 12 gekennzeichnet. Nachdem das Getränk abgekühlt ist, wird mittels einer noch näher erläuterten Dosiereinrichtung 13 Aroma- oder ein sonstiger Zusatzstoff in den Volumenstrom des Getränkes eingespritzt. Für jedes Aroma- bzw. für jeden Zusatzstoff ist eine Dosiereinrichtung vorgesehen. Der Einfachheit halber ist jedoch in der Fig. 1 nur eine Dosiereinrichtung 13 angedeutet.

Die Dosiereinrichtung 13 beinhaltet einen Vorratstank 14, eine Vorfilter 15, eine Dosierpumpe 16, einen Kondensatablaß 17, eine induktive Durchflußmeßeinrichtung 18, mit der die in einer Zeiteinheit durchströmte Menge von Aroma- oder einem Zusatzstoff ermittelt wird, einem sterilen Hauptfilter 19 und einem Magnetventil 20. Die vorgenannten Bauteile 14 bis 20 liegen in Strömungsrichtung des Aromas hintereinander und sind durch Rohrstücke verbunden. Die mittels der Durchflußmeßeinrichtung 18 ermittelten Werte werden in einer Steuereinheit 21 ausgewertet und zur Steuerung der Dosierpumpe 16 benutzt. Von dieser Steuereinheit wird auch das Magnetventil 20 gesteuert, um das Aroma dosiert in das zur Fülleinrichtung führende Rohrstück 12 einzuspritzen. Auch das Rohrstück 12 ist mit einer induktiven Durchflußmeßeinrichtung ausgerüstet, welche in Strömungsrichtung des Getränks vor der Einspritzstelle des Aromas liegt. Die ermittelten Werte werden ebenfalls in die Steuereinheit 21 eingespeist, dort ausgewertet und zur Regelung der Durchflußmenge des Getränkes in nicht näher erläuterter Weise verwendet. Aus den zwischen den Teilen 14 bis 20 liegenden Rohrstücken wird eine Zuführleitung 23 für das Aroma bzw. für den Zusatzstoff gebildet. Zwischen der Stelle, wo die Zuführleitung 23 in das Rohrstück 12 einmündet und der Fülleinrichtung 10 liegt eine Verwirbelungsstrecke 24, wie durch die Wellenform angedeutet.

### Bezugszeichen

10 Fülleinrichtung
11 Ultrahocherhitzungs anlage
12 Rohrstück
13 Dosiereinrichtung
14 Vorratstank
15 Vorfilter
16 Dosierpumpe
17 Kondensatabfluß
18 Durchflußmeßeinrichtung
19 Hauptfilter
20 Magnetventil
21 Steuereinheit
22 Durchflußmeßeinrichtung
23 Zuführleitung
24 Verwirbelungsstrecke

## Patentansprüche

1. Verfahren zum Aufbereiten von Getränken, wobei keimfreie Aroma- und/oder Zusatzstoffe in das abgekühlte, zuvor durch kurzzeitige Erhitzung sterilisierte Getränk in dosierten Mengen homogen eingegeben werden, ***dadurch gekenn*****zeichnet**, daß nach der Zugabe der Aroma- und/oder der Zusatzstoffe eine Mischung durchgeführt wird, die ausschließlich durch Verwirbelung erfolgt.

2. Vorrichtung zur Durchführung des Verfahrens nach Anspruch 1, mit einem Vorratsbehälter (14) zur Aufnahme von mindestens einem Aroma- und/oder einem Zusatzstoff und einer steuerbaren Dosierpumpe (16), gekennzeichnet durch einen Mischkanal zur Bildung der Verwirbelungsstrecke 24 und für die Mischung der zugeschlagenen Aroma- und/oder Zusatzstoffe mit dem Getränk.

3. Vorrichtung nach Anspruch 2, dadurch gekennzeichnet, daß zwischen dem Vorratsbehälter (14) und der Dosierpumpe (16) ein Vorfilter (15) angeordnet ist.

4. Vorrichtung nach Anspruch 2 oder 3, dadurch gekennzeichnet, daß in Durchflußrichtung der Aroma- bzw. der Zusatzstoffe gesehen, hinter der Dosierpumpe (16) eine Durchflußmeßeinrichtung (18) vorgesehen ist, und daß in dem Rohrstück (12) für die Zuleitung des Getränkes zur Fülleinrichtung (10) eine weitere Durchflußmeßeinrichtung (22) für das Getränk vorgesehen ist.

5. Vorrichtung nach Anspruch 4, dadurch gekennzeichnet, daß die von den beiden Durchflußmeßeinrichtungen (18, 22) ermittelten Werte in eine Steuereinheit (21) einspeisbar sind und daß diese Werte zur Steuerung der Dosierpumpe (16) und zur Regelung des Volumenstromes des Getränkes benutzbar sind.

6. Vorrichtung nach einem der Ansprüche 2 bis 5, dadurch gekennzeichnet, daß in Durchflußrichtung der Aroma- bzw. der Zusatzstoffe gesehen, hinter der Dosierpumpe (16) ein steriler Hauptfilter (19) angeordnet ist.

7. Vorrichtung nach Anspruch 5 oder 6, dadurch gekennzeichnet, daß in der Zuführleitung (23) für die Aroma- bzw. Zusatzstoffe unmittelbar vor dem Einmünden in das zur Fülleinrichtung (10) führende Rohrstück (12) für das Getränk ein schließbares Ventil, vorzugsweise ein Magnetventil (20) vorgesehen ist, welches von der Steuereinheit (21) ansteuerbar ist.

## Claims

1. Method of preparing beverages, wherein bacteria-free aromatic substances and/or additives are homogeneously added in metered quantities into the cooled beverage previously sterilised by brief heating, characterised thereby that after the addition of the aromatic substances and/or additives a mixing is carried out, which takes place exclusively by formation of turbulence.

2. Device for carrying out the method according to claim 1, comprising a reserve container (14) for reception of at least one aromatic substance and/or additive and a controllable metering pump (16), characterised by a mixing channel for the formation of the turbulence-forming path (24) and for the mixing of the aromatic substances and/or additives with the beverage.

3. Device according to claim 2, characterised thereby that a preliminary filter (15) is arranged between the reserve container (14) and the metering pump (16).

4. Device according to claim 2 or 3, characterised thereby that a throughflow measuring device (18) is provided behind the metering pump (16) as seen in throughflow direction of the aromatic substances or additives and that a further throughflow measuring device (22) for the beverage is provided in the pipe length (12) for the conducting of the beverage to the filling equipment (10).

5. Device according to claim 4, characterised thereby that the values ascertained by the two throughflow measuring devices (18, 22) can be stored in a control unit (21) and that these values can be used for control of the metering pump (16) and for regulation of the volume flow of the beverage.

6. Device according to one of claims 2 to 5, characterised thereby that a sterile main filter (19) is arranged behind the metering pump (16) as seen in throughflow direction of the aromatic substances or additives.

7. Device according to claim 5 or 6, characterised thereby that a closable valve, preferably a magnetic valve (20), which is drivable by the control unit (21), is provided in the feed duct (23) for the aromatic substances or additives directly in front of the opening in the pipe length (12), which leads to the filling equipment (10), for the beverage.

## Revendications

1. Procédé de préparation de boissons, dans lesquelles des substances aromatiques et/ou des substances d'addition stériles sont introduites en des quantités dosées, dans la boisson stérilisée au préalable par un réchauffage court, caractérisé en ce qu'après l'addition des substances aromatiques et/ou des substances d'addition un mélange est effectué, exclusivement par voie tourbillonnaire.

2. Dispositif pour la réalisation du procédé selon la revendication 1, avec un réservoir de stockage (14) destiné à recevoir au moins une substance aromatique et/ou une substance d'addition et avec une pompe doseuse (16) réglable, caractérisé par un canal de mélange pour le formation du tronçon tourbillonnaire (24) et pour assurer le mélange des substances aromatiques et/ou des substances d'addition avec la boisson.

3. Dispositif selon la revendication 2, caractérisé en ce que, entre le réservoir de stockage (14) et la pompe doseuse est placé un préfiltre (15).

4. Dispositif selon les revendications 2 ou 3, caractérisé en ce que, en regardant dans le sens de passage des substances aromatiques et/ou des substances d'addition, il est prévu derrière la pompe de dosage (16) un dispositif de mesure du flux passant (18) et en ce que dans le tronçon de tuyau (12) il est prévu pour l'amenée de la boisson au dispositif de remplissage (10) un autre appareillage de mesure du flux de passage (22) pour la boisson.

5. Dispositif selon la revendication 4, caractérisé en ce que, les valeurs déterminées par les deux dispositifs de mesure du flux (18, 22) peuvent être introduits dans un module de commande (21) et en ce que ces valeurs peuvent être utilisées pour commander la pompe doseuse (16) et pour la régulation du courant volumique de la boisson.

6. Dispositif selon une des revendications 2 à 5, caractérisé en ce que, vu dans le sens de passage du flux, des matières aromatiques ou de matières additives, est monté derrière la pompe doseuse (16) un filtre principal (19) stérile.

7. Dispositif selon les revendications 5 ou 6, caractérisé en ce que, dans la conduite d'amenée (23) des substances aromatiques ou des substances d'addition, il est prévu directement avant son embouchure dans le tronçon de tuyau (12) de la boisson conduisant au dispositif de remplissage (10), une vanne obturable, de référence une électrovanne (20), qui peut être commandée par l'unité de commande (21).
